# EUROPÄISCHE PATENTSCHRIFT

(11) **EP 1 054 602 B1**
(45) Veröffentlichungstag und Bekanntmachung des Hinweises auf die Patenterteilung: **20.04.2005**
(21) Anmeldenummer: 99913136.0
(22) Anmeldetag: 03.02.1999
(51) Int. Cl.: A23L 2/04, A23L 2/02, A23L 1/10

(54) **VERFAHREN ZUR ERHÖHUNG DER FRUCHTSAFTAUSBEUTE BEI DER GEWINNUNG VON FRUCHTSAFTKONZENTRAT**
METHOD FOR INCREASING THE YIELD OF FRUIT JUICE IN THE EXTRACTION OF FRUIT JUICE CONCENTRATE
PROCEDE POUR L'AUGMENTATION DU RENDEMENT EN JUS DE FRUIT LORS DE LA PRODUCTION DE JUS DE FRUIT CONCENTRE

(30) Priorität: 04.02.1998 DE 19806195
(43) Veröffentlichungstag der Anmeldung: 29.11.2000
(73) Patentinhaber: WeserGold Getränkeindustrie GmbH & Co. KG, 31737 Rinteln (DE)
(72) Erfinder: HARTINGER, Richard, D-31737 Rinteln (DE)
(74) Vertreter: UEXKÜLL & STOLBERG
(86) Internationale Anmeldenummer: PCT/EP1999/000658
(87) Internationale Veröffentlichungsnummer: WO 1999/039590

(56) Entgegenhaltungen:
- EP-A- 0 137 671
- US-A- 4 942 051
- SCHOBINGER ,ULRICH ET AL.: "Fructh- und Gemüsesäfte ; Technologie, Chemie, Mikrobiologie, analytik, Bedeutung, Recht" 1987 , VERLAG EUGEN-ULMER, 2 AUFLAGE XP002107474 siehe Seite 213
- 1987, SCHOBINGER, ULRICH ET AL. , VERLAG EUGEN-ULMER, 2.AUFLAGE * Seiten 90-93 * * Seiten 122-129 * * Seiten 230-233 * * Seiten 252-256 *

## Beschreibung

Die Erfindung betrifft allgemein ein Verfahren zur Gewinnung von Fruchtsaftkonzentrat und insbesondere ein Verfahren, um bei der Gewinnung von Fruchtsaftkonzentrat aus Citrusfrüchten die Fruchtsaftausbeute zu erhöhen.

Fruchtsäfte sind unvergorene, aber garfähige, alkoholfreie Erzeugnisse vor allem aus Kernobst, Trauben und Citrusfrüchten, die das charakteristische Aroma, den charakteristischen Geschmack und die charakteristische Farbe der betreffenden Säfte besitzen. Man gewinnt die Säfte auf mechanischem Wege aus frischen oder durch Kälte haltbar gemachten Früchten, die von groben und/oder unverdaulichen Teilen, wie zum Beispiel von Schalen und Kernen, befreit sowie durch physikalische Verfahren haltbar gemacht werden.

Ein Problem bei der Herstellung von Fruchtsäften besteht darin, daß nach der herstellungstechnisch bedingten Zerkleinerung der Früchte (z. B. beim Entsaften) ungeregelte enzymatische und sonstige Reaktionen einsetzen, da mit Zerstörung der Zellen Enzyme und andere Inhaltsstoffe nicht mehr durch Zellmembranen voneinander getrennt sind.

Eine Möglichkeit, diese unerwünschten Reaktionen zu verhindern, besteht darin, ein Fruchtsaftkonzentrat herzustellen. Hierzu wird das nach dem Entsaften entstandene Gemisch aus Pulpe und Fruchtsaft mittels einer Passiermaschine in Fruchtsaft und Pulpe (Fruchtfleisch) getrennt. Anschließend wird der Fruchtsaft durch Konzentrierung zu Fruchtsaftkonzentrat verarbeitet. Die Pulpe kann durch Wärmebehandlung und Kühlung oder aseptisches Verpacken haltbar gemacht werden. Durch diese geeigneten Verarbeitungsschritte können die obengenannten Reaktionen verhindert werden. Die Wiederherstellung von Fruchtsaft erfolgt durch ein Rückverdünnungsverfahren, bei dem dem Fruchtsaftkonzentrat die bei der Konzentrierung entzogene Menge an Wasser wieder zugeführt wird. Außerdem kann die vor der Konzentrierung entzogene Pulpe ganz oder teilweise wieder beigemengt werden.

Außerdem werden durch die Herstellung von Fruchtsaftkonzentrat im Erzeugerland und durch die anschließende Rückverdünnung im Verbraucherland die Transportkosten erheblich verringert, da das Volumen und das Gewicht des Konzentrats gegenüber dem eigentlichen Fruchtsaft wesentlich vermindert sind.

Die Gewinnung von Fruchtsaftkonzentrat aus Citrusfrüchten erfolgt bekannterweise dadurch, daß die Früchte in einer Entsaftungsanlage in mehrere Bestandteilsgruppen getrennt werden, und zwar in Schalen, Fruchthaut, Kerne und Ölemulsion einerseits sowie in Pulpe und Fruchtsaft andererseits. Dieses Gemisch aus Pulpe und Fruchtsaft wird anschließend einer Passiermaschine zugeführt und dort in Pulpe und Primär-Saft aufgespalten. Der Primär-Saft wird anschließend zur Herstellung von Fruchtsaftkonzentrat auf bekannte Weise weiterverarbeitet.

In einem weiteren Verfahrensschritt wird die beim Passieren gewonnene Pulpe einer Pulpenextraktion unterzogen, bei der unter Zugabe von Wasser einerseits Pulpenextrakt und andererseits Pulpenrückstände entstehen. Diese Pulpenrückstände sind Abfallstoffe und für die Getränkeherstellung nicht weiter verwertbar. Sie werden daher zumeist getrocknet und beispielsweise zu Tierfutter oder Düngemittel weiterverarbeitet.

Der Pulpenextrakt wird anschließend einem Verdampfer zugeführt. Ziel dieses Verfahrensschrittes besteht darin, den Pulpenextrakt einzudicken, wozu aus dem Pulpenextrakt Kondensat ausgeschieden wird. Der so konzentrierte Pulpenextrakt ist für die Herstellung von Fruchtsaft nicht geeignet und wird zumeist als Grundstoff für Erfrischungsgetränke eingesetzt.

Dieses bekannte Verfahren hat mehrere Nachteile:
- Bei der Pulpenextraktion gehen über die Pulpenrückstände beträchtliche Mengen an Saft verloren, der als Fruchtsaft verwertbar wäre. Dies hat große finanzielle Verluste zur Folge.
- Der entstandene Pulpenextrakt und somit auch der konzentrierte Pulpenextrakt enthalten einige Inhaltsstoffe, die zu einer geschmacklichen Beeinträchtigung der unter Verwendung des konzentrierten Pulpenextrakts hergestellten Erfrischungsgetränke führen.
- Bei dem bekannten Verfahren entstehen große Mengen an Restflüssigkeit. Wie vorstehend erläutert, muß zur Extraktion der Pulpe sehr viel Wasser eingesetzt werden, wobei dieses Wasser nach der Extraktion in den Pulpenrückständen verbleibt bzw. nach dem Verdampfen des Pulpenextrakts als Kondensat anfällt. Durch den hohen Wasserverbrauch sowie den hohen Einsatz an Energie beim anschließenden Entziehen des Wassers beim Trocknen der Pulpenrückstände bzw. beim Verdampfen des Pulpenextrakts entstehen Herstellungskosten. Weiterer Fruchtsaft wird dabei nicht mehr gewonnen.
- Schließlich ist es gewünscht, die entstehende Menge des konzentrierten Pulpenextrakts möglichst zu vermindern. Es ist aus wirtschaftlichen Gründen sinnvoll, keinen Pulpenextrakt herzustellen, sondern den in der Pulpe enthaltenen Restsaft in hoher Qualität zu gewinnen und zur Herstellung von Fruchtsaftkonzentrat einzusetzen.

Die US-A-4,942,051 offenbart allgemein ein Verfahren zur Herstellung von Fruchtsäften, insbesondere von Zitrussäften. Dabei wird Roh-Saft von einem Entsafter durch ein feines Sieb geleitet, mit Hilfe dessen der Roh-Saft in fertigen Saft und Pulpe aufgespalten wird. Die Pulpe wird einem groben Sieb zugeführt, um die Pulpe in Pulpen-Rückstände und pulpenartigen Saft aufzuspalten, wobei letzterer wieder dem feinen Sieb zugeführt wird. Alternativ wird der Roh-Saft durch ein erstes Sieb geleitet, um den Roh-Saft in einen ersten Saft-Bestandteil und in einen Pulpen-Bestandteil aufzuspalten, der durch ein zweites Sieb geleitet wird, um in Pulpen-Rückstände und pulpenartigen Saft getrennt zu werden. Der erste Saft-Bestandteil und der pulpenartige Saft werden dann zusammen durch ein drittes Sieb geleitet, um diese Mischung in fertigen Saft und Pulpen-Rückstände aufzuspalten, wobei die Pulpen-Rückstände wieder dem Sieb zugeführt werden.

Die EP-A-0 137 671 beschreibt die Herstellung von FruchtsaftKonzentrat, bei der aber lediglich die Pulpe und nicht der Sekundär-Saft pasteurisiert wird.

In "Frucht- und Gemüsesäfte, Technologie, Chemie, Mikrobiologie, Analytik, Bedeutung, Recht", Schobinger, Ulrich et al., Verlag Eugen Ulmer, 1987, 2. Auflage, XP002107474, sind auf Seiten 126, 127 und 231 verschiedene Verfahren zur Herstellung von Fruchtsäften gezeigt und beschrieben.

Es ist folglich **Aufgabe** der vorliegenden Erfindung, ein Verfahren zur Herstellung von Fruchtsaftkonzentrat zu schaffen, bei dem die Ausbeute an verwertbarem Fruchtsaft erhöht wird und möglichst wenig Restflüssigkeit und Abfallstoffe anfallen.

Zur **Lösung** der Aufgabe dienen die Merkmale des Anspruchs 1. Vorteilhafte Ausgestaltungen der Erfindung sind Gegenstand der Unteransprüche.

Die vorliegende Erfindung wird nun anhand eines Beispiels unter Bezugnahme auf die beiliegenden Zeichnungen beschrieben; es zeigen:
- Figur 1: eine schematische Darstellung der Verfahrensschritte bei einem üblichen Verfahren zur Herstellung von Fruchtsaftkonzentrat; und
- Figur 2: eine schematische Darstellung des erfindungsgemäßen Verfahrens zur Herstellung von Fruchtsaftkonzentrat.

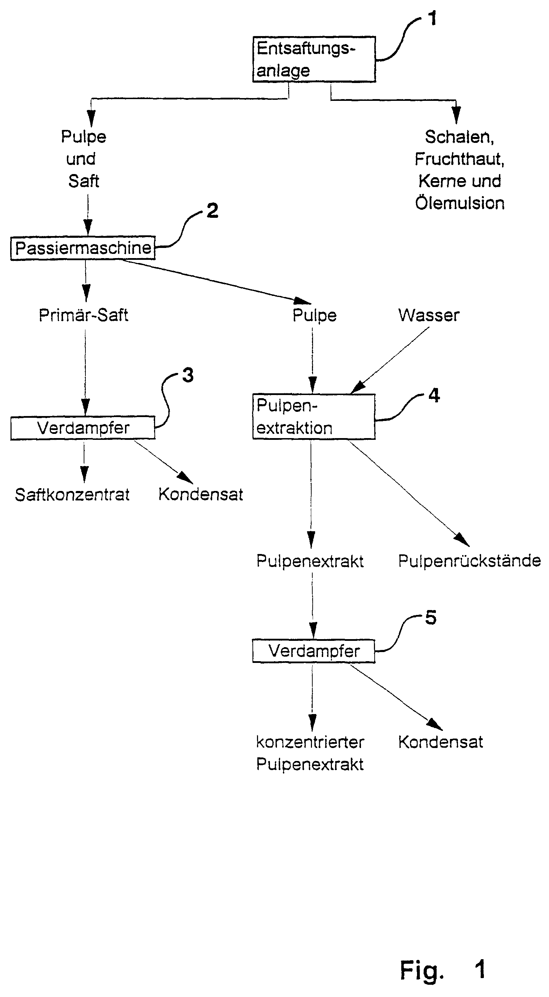

Nachfolgend wird auf Figur 1 Bezug genommen, in der das bekannte Verfahren zur Herstellung von Fruchtsaftkonzentrat dargestellt ist. Zunächst werden mikrobiell befallene (faule) Früchte aussortiert. Die verbleibenden, zu Fruchtsaftkonzentrat zu verarbeitenden Citrusfrüchte werden dann gereinigt und einer Entsaftungsanlage 1 zugeführt. Dort werden die Citrusfrüchte entsaftet und in zwei Hauptbestandteilsgruppen getrennt. Die erste Gruppe umfaßt Schalen, Fruchthaut, Kerne und Ölemulsion. Die zweite Gruppe umfaßt eine Mischung aus Pulpe und Fruchtsaft.

Dieses Gemisch aus Pulpe und Fruchtsaft wird dann einer Passiermaschine 2 zugeführt und dort in Primär-Saft und Pulpe getrennt.

Der Primär-Saft wird einem Verdampfer 3 zugeführt, wo er eingedickt wird. Bei diesem Verfahrensschritt entstehen Fruchtsaftkonzentrat und Kondensat als Abfallprodukt. Das Fruchtsaftkonzentrat kann nun in Tiefkühltanks eingelagert oder in Fässer abgefüllt werden. In diesen Gebinden erfolgt die Anlieferung beim Safthersteller, wo das Fruchtsaftkonzentrat zur Herstellung von trinkbarem Fruchtsaft weiterverarbeitet wird.

Die in der Passiermaschine 2 abgetrennte Pulpe wird einer Pulpenextraktion 4 unterzogen. Dabei werden unter Hinzufügung von Wasser Pulpenextrakt und Pulpenrückstände erzeugt. Die Pulpenrückstände sind für die Getränkeherstellung nicht weiter verwertbar. Sie können daher getrocknet und anschließend beispielsweise zu Viehfutter weiterverarbeitet werden.

Der bei der Pulpenextraktion 4 erzeugte Pulpenextrakt wird einem Verdampfer 5 zugeführt. Bei diesem Verfahrensschritt wird der Pulpenextrakt eingedickt, wobei Kondensat und konzentrierter Pulpenextrakt entstehen. Der konzentrierte Pulpenextrakt dient als Grundstoff für Erfrischungsgetränke.

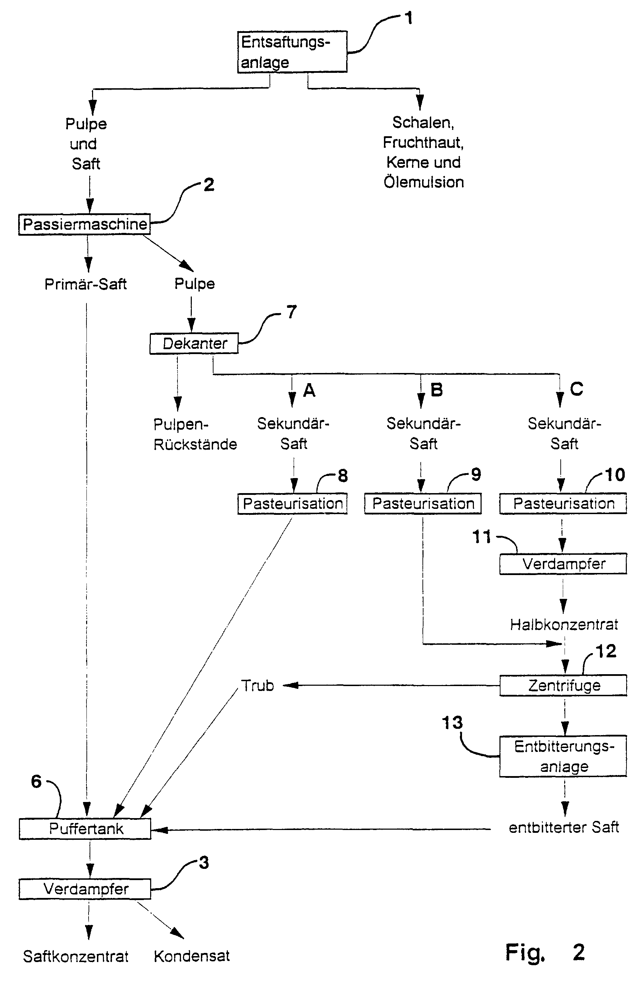

In Figur 2 ist das erfindungsgemäße Verfahren zur Verarbeitung von Citrusfrüchten dargestellt. Die Früchte werden auch hier zunächst sortiert, gereinigt und dann einer Entsaftungsanlage 1 zugeführt. Genau wie bei dem vorstehend beschriebenen Verfahren werden die Citrusfrüchte ebenfalls in zwei Hauptbestandteilsgruppen getrennt, wobei die erste Gruppe Schalen, Fruchthaut, Kerne und Ölemulsion und die zweite Gruppe ein Gemisch aus Pulpe und Fruchtsaft umfaßt. Diese Gemisch aus Pulpe und Fruchtsaft kann wahlweise einem Röhrenerhitzer (nicht gezeigt) zugeführt werden, wo bei Temperaturen von 90 bis 115°C und einer Verweilzeit von 20 - 60 Sekunden die Zerstörung der qualitätsschädigenden Enzyme erfolgt. Teilweise reichen auch schon geringere Temperaturen von mehr als 50°C aus, um eine Denaturierung und folglich eine Deaktivierung der qualitätsschädigenden Enzyme zu erreichen. Das Erhitzen sollte möglichst schnell nach dem Zerkleinern bzw. Entsaften der Früchte erfolgen, um die Zeitdauer, innerhalb derer die Enzyme aktiv sind, möglichst kurz zu halten. Anschließend wird das Gemisch aus Pulpe und Fruchtsaft (entweder direkt von der Entsaftungsanlage oder über den Röhrenerhitzer) einer Passiermaschine 2 zugeführt und dort in Primär-Saft und Pulpe getrennt. Der Primär-Saft wird in einen Puffertank 6 geleitet und anschließend weiterverarbeitet, wie später erläutert wird. Auf dem Weg zum Puffertank 6 kann der Primär-Saft rückgekühlt (sofern er vor dem Passieren erhitzt wurde) und entgast werden. Es ist ebenfalls möglich, den Primär-Saft durch eine Hoch-Kurzzeit-Erhitzung (bei 90 - 115°C und 20 - 60 Sekunden) von Keimen zu befreien. Teilweise reichen auch hier schon geringere Temperaturen von mehr als 50°C aus, um eine Denaturierung und folglich eine Deaktivierung der qualitätsschädigenden Enzyme zu erreichen. Auch bei dieser Alternative sollte das Erhitzen, wie oben erläutert, möglichst schnell nach dem Passieren erfolgen, um die Zeitdauer, innerhalb derer die Enzyme aktiv sind, möglichst kurz zu halten.

Die mittels der Passiermaschine 2 gewonnene Pulpe ist eine Mischung aus Pulpe-Feststoffen und darin verbliebenen Fruchtsaftbestandteilen. Die Pulpe wird zu einem Dekanter 7 weitergeleitet, wo sie kontinuierlich in Pulpen-Rückstände und Sekundär-Saft getrennt wird. Statt des Dekanters 7 können auch andere bekannte Formen von kontinuierlich arbeitenden Zentrifugen verwendet werden. Die Pulpen-Rückstände werden über den Dekanterschneckenaustrag abgeleitet, anschließend getrocknet und beispielsweise zu Viehfutter weiterverarbeitet oder als Düngemittel verwendet.

Der Sekundär-Saft aus dem Dekanter 7 kann alternativ oder in Kombination drei verschiedene Verfahrenswege durchlaufen:
a) Der erste Verfahrensweg A wird bevorzugt bei Sekundär-Säften mit einem niedrigen Bitterstoffgehalt angewendet. Wie in Figur 2 zu sehen, wird der Sekundär-Saft direkt nach dem Dekantern 7 einer Pasteurisation 8 unterzogen, was zum Beispiel in einem Plattenerhitzer erfolgen kann. Der pasteurisierte Saft wird dann in den Puffertank 6 geleitet.
b) Bei dem zweiten Verfahrensweg B wird der Sekundär-Saft nach dem Dekantern 7 einem Plattenerhitzer zugeführt und dort einer Pasteurisation 9 unterzogen. Danach wird der pasteurisierte Sekundär-Saft einer Zentrifuge 12 zugeführt, um feine Trubbestandteile des Sekundär-Saftes abzutrennen, die dann in einer bestimmten Dosierung in den Puffertank 6 geleitet werden. Nach der Zentrifugation wird der von Trubbestandteilen befreite Sekundär-Saft einer Entbitterungsanlage 13 zugeführt und mittels einer Adsorptionssäule entbittert. Der so entbitterte Saft wird dem bereits in dem Puffertank 6 enthaltenen Primär-Saft mengenabhängig zudosiert.
c) Auch bei dem dritten Verfahrensweg C wird der Sekundär-Saft nach dem Dekantern 7 einem Plattenerhitzer zugeführt und dort einer Pasteurisation 10 unterzogen. Anschließend wird der pasteurisierte Sekundär-Saft auf die Eintrittstemperatur für die Verdampfungsanlage 11 heruntergekühlt und zu Halbkonzentrat (22 bis 28 Brix) aufgearbeitet. Bei der Verdampfung findet gleichzeitig eine Entölung statt. Das Halbkonzentrat wird nun der Zentrifuge 12 zugeführt, um feine Trubbestandteile des Sekundär-Saftes abzutrennen, die in mengenabhängiger Dosierung in den Puffertank 6 geleitet werden. Nach der Zentrifugation wird der von Trubbestandteilen befreite Sekundär-Saft (d.h. das Halbkonzentrat) ebenfalls der Entbitterungsanlage 13 zugeführt und mittels einer Adsorptionssäule entbittert. Der entbitterte Saft wird dem im Puffertank 6 enthaltenen Primär-Saft mengenabhängig zudosiert.

Zu Verfahrensweg C sei angemerkt, daß das Halbkonzentrat nach dem Verdampfen in dem Verdampfer 11 nicht direkt der Zentrifuge 12 zugeführt werden muß. Beide Verfahrensschritte (Verdampfen und Zentrifugieren) können auch an verschiedenen Orten durchgeführt werden. Dazu kann das Halbkonzentrat nach dem Verdampfen zunächst in Tiefkühltanks eingelagert oder aseptisch in Fässer abgefüllt werden, in denen die Anlieferung beim Safthersteller erfolgt, wo die folgenden Verfahrensschritte durchgeführt werden.

Die in dem Puffertank 6 enthaltene Mischung aus Primär-Saft, weiterverarbeitetem Sekundär-Saft und Trubbestandteilen wird anschließend einem Verdampfer 3 zugeführt, wo der Saft eingedickt wird. Bei diesem Verfahrensschritt entstehen Fruchtsaftkonzentrat und Kondensat als Abfallprodukt. Das Fruchtsaftkonzentrat kann nun, wie bereits oben erläutert, in Tiefkühltanks eingelagert oder in Fässer abgefüllt und später zu trinkbarem Fruchtsaft weiterverarbeitet werden.

Es sei angemerkt, daß der Puffertank 6 für das Verfahren an sich nicht zwingend erforderlich ist. Der Primär-Saft und die auf den verschiedenen Verfahrenswegen A, B und C weiterverarbeiteten Sekundär-Säfte können auch direkt dem Verdampfer 3 zugeführt werden. Der Puffertank 6 dient hier lediglich zur Zwischenspeicherung von nicht sofort weiterzuverarbeitenden Säften.

## Patentansprüche

1. Verfahren zur Gewinnung von Fruchtsaftkonzentrat mit den folgenden Schritten:
a) Entsaften (1) von Früchten, um ein Gemisch aus Pulpe und Fruchtsaft zu erzeugen,
b) Trennen (2) des Gemisches aus Pulpe und Fruchtsaft in Pulpe und in Primär-Saft,
c) Trennen (7) der Pulpe in Pulpen-Rückstände und in Sekundär-Saft,
d) Pasteurisieren (8) des Sekundär-Saftes,
e) Beimengen des Sekundär-Saftes zu dem Primär-Saft, und
f) Weiterverarbeiten der Mischung aus Primär-Saft und Sekundär-Saft zu Fruchtsaftkonzentrat.

2. Verfahren nach Anspruch 1, mit den Schritten:
g) Pasteurisieren (9) des in Schritt c) erzeugten Sekundär-Saftes,
h) Zentrifugieren (12) des Sekundär-Saftes, um Trubbestandteile abzuspalten,
i) Entbittern (13) des von Trubbestandteilen befreiten Sekundär-Saftes,
j) Beimengen des entbitterten Sekundär-Saftes und der Trubbestandteile zu dem Primär-Saft, und
k) Weiterverarbeiten des Gemisches aus Primär-Saft, entbittertem Sekundär-Saft und Trubbestandteilen zu Fruchtsaftkonzentrat.
wobei Schritte g) - k) die Schritte d) - f) des Anspruchs 1 ersetzen

3. Verfahren nach Anspruch 1 oder Anspruch 2, mit den Schritten:
1) Pasteurisieren (10) des in Schritt c) erzeugten Sekundär-Saftes,
m) Verdampfen (11) des Sekundär-Saftes, um Halbkonzentrat zu erzeugen,
n) Zentrifugieren (12) des Halbkonzentrats, um Trubbestandteile abzuspalten,
o) Entbittern (13) des von Trubbestandteilen befreiten Halbkonzentrats,
p) Beimengen des entbitterten Halbkonzentrats und der Trubbestandteile zu dem Primär-Saft, und
q) Weiterverarbeiten des Gemisches aus Primär-Saft, entbittertem Halbkonzentrat und Trubbestandteilen zu Fruchtsaftkonzentrat.
wobei die Schritte l) - q) die Schritte d) - f) des Anspruchs 1 und die Schritte g) - k) des Anspruchs 2 ersetzen.

4. Verfahren nach einem der vorhergehenden Ansprüche, bei dem das in Schritt c) durchgeführte Trennen der Pulpe in Pulpen-Rückstände sowie in Sekundär-Saft mit Hilfe eines Dekanters (7) erfolgt.

5. Verfahren nach einem der vorhergehenden Ansprüche, bei dem das Pasteurisieren des Sekundär-Saftes zeitlich unmittelbar nach dem Trennen (7) der Pulpe in Pulpen-Rückstände sowie in Sekundär-Saft erfolgt.

## Claims

1. Method for the extraction of fruit juice concentrate comprising the following steps:
a) juice extraction (1) of fruits to produce a mixture of pulp and fruit juice,
b) separation (2) of the mixture of pulp and fruit juice into pulp and primary juice,
c) separation (7) of the pulp into pulp residues and secondary juice,
d) pasteurisation (8) of the secondary juice,
e) admixture of the secondary juice to the primary juice, and
f) further, processing of the mixture of primary juice and secondary juice to give fruit juice concentrate.

2. Method according to claim 1, comprising the steps:
g) pasteurisation (9) of the secondary juice produced in step c),
h) centrifuging (12) of the secondary juice to separate sludge constituents,
i) debitterisation (13) of the secondary juice from which the sludge constituents have been removed,
j) admixture of the debitterised secondary juice and the sludge constituents to the primery juice, and
k) further processing of the mixture of primary juice, debitterised secondary juice and sludge constituents to give fruit juice concentrate,
wherein steps g) - k) replace steps d) - f) of claim 1.

3. Method according to claim 1 or claim 2, comprising the steps:
l) pasteurisation (10) of the secondary juice produced in step c),
m) evaporation (11) of the secondary juice to produce semi-concentrate,
n) centrifuging (12) of the semi-concentrate to separate sludge constituents,
o) debitterisation (13) of the semi-concentrate from which the sludge constituents have been removed,
p) admixture of the debitterised semi-concentrate and the sludge constituents to the primary juice, and
q) further processing of the mixture of the primary juice, debitterised semi-concentrate and sludge constituents to give fruit juice concentrate,
wherein steps l) - q) replace steps d) - f) of claim 1 and steps g) - k) of claim 2.

4. Method according to one of the preceding claims, wherein the separation of the pulp into pulp residues and secondary juice carried out in step c) takes place with the aid of a decanter (7).

5. Method according to one of the preceding claims, wherein the pasteurisation of the secondary juice takes place as soon as the separation (7) of the pulp into pulp residues and secondary juice has taken place.

## Revendications

1. Procédé d'obtention d'un concentré de jus de fruit présentant les étapes suivantes:
a) extraction (1) de jus de fruits pour produire un mélange de pulpe et de jus de fruit
b) séparation (2) du mélange de pulpe et de jus de fruit en la pulpe et un jus primaire,
c) séparation (7) de la pulpe en des résidus de pulpe et en un jus secondaire,
d) pasteurisation (8) du jus secondaire,
e) mélange du jus secondaire avec le jus primaire, et
f) continuation du traitement du mélange du jus primaire et du jus secondaire pour obtenir le concentré de jus de fruit.

2. Procédé selon la revendication 1 comprenant les étapes:
g) pasteurisation (9) du jus secondaire produit lors de l'étape c),
h) centrifugation (12) du jus secondaire pour séparer les composantes de turbidité,
i) enlèvement (13) de l'amertume du jus secondaire libéré des composantes de turbidité,
j) mélange du jus secondaire, dont l'amertume est retirée, et des composantes de turbidité avec le jus primaire, et
k) poursuite du traitement du mélange du jus primaire, du jus secondaire, dont l'amertume est retirée, et des composantes de turbidité pour former un concentré de jus de fruit,
les étapes g) - k) remplaçant les étapes d) - f) de la revendication 1.

3. Procédé selon la revendication 1 ou la revendication 2, comprenant les étapes:
l) pasteurisation (10) du jus secondaire produit lors de l'étape c),
m) évaporation (11) du jus secondaire pour produire un demi-concentré,
n) centrifugation (12) du demi-concentré pour séparer des composantes de turbidité,
o) enlèvement (13) de l'amertume du demi-concentré libéré de composantes de turbidité,
p) mélange du demi-concentré, dont l'amertume est retirée, et des composantes de turbidité avec le jus primaire, et
q) poursuite du traitement du mélange du jus primaire, du demi-concentré, dont l'amertume est retirée et des composantes de turbidité pour former un concentré de jus de fruit,
les étapes l) - q) remplaçant les étapes d) - f) de la revendication 1 et les étapes g) - k) de la revendication 2.

4. Procédé selon l'une des revendications précédentes, selon lequel la séparation exécutée lors de l'étape c), de la pulpe en des résidus de pulpe ainsi qu'en un jus secondaire s'effectue à l'aide d'un dispositif de séparation (7).

5. Procédé selon l'une des revendications précédentes, selon lequel la pasteurisation du jus secondaire s'effectue dans le temps juste après la séparation (7) de la pulpe en des résidus de pulpe ainsi qu'en un jus secondaire.
